# EUROPÄISCHE PATENTSCHRIFT

(11) **EP 1 920 995 B1**
(45) Veröffentlichungstag und Bekanntmachung des Hinweises auf die Patenterteilung: **20.10.2010**
(21) Anmeldenummer: 07119470.8
(22) Anmeldetag: 29.10.2007
(51) Int. Cl.: B62D 21/14, B62D 21/20, B62D 49/06, B62D 63/06

(54) **Fahrgestell mit Rädern und/oder Raupenlaufwerken mit veränderbarer Spurbreite**
Vehicle chassis with wheels and/or tracks having variable track width
Châssis de véhicule à roues et/ou chenillé à écartement variable

(30) Priorität: 13.11.2006 DE 102006053683
(43) Veröffentlichungstag der Anmeldung: 14.05.2008
(73) Patentinhaber: Horsch Maschinen GmbH, 92421 Schwandorf (DE)
(72) Erfinder: Horsch, Michael, 92421 Schwandorf (DE)
(74) Vertreter: Benninger, Johannes

(56) Entgegenhaltungen:
- EP-A- 0 637 539
- EP-A- 0 715 030
- WO-A-2005/021321
- DE-A1- 2 018 070
- DE-A1- 3 608 527
- DE-B- 1 175 617
- US-A- 3 306 390
- US-A- 5 090 720

## Beschreibung

Die vorliegende Erfindung betrifft ein Fahrgestell mit Rädern und/oder Raupenlaufwerken, das insbesondere als Anhänger für ein landwirtschaftliches Fahrzeug geeignet ist, mit den Merkmalen des Oberbegriffs des Anspruchs 1.

### Stand der Technik

Zur Erntezeit müssen in kurzer Zeit große Mengen an Erntegut vom Feld abtransportiert werden. Da die Erntemaschinen immer größer werden (Bsp: Kapazität eines Mähdreschers 70-100t/h; Kapazität eines Getreide- / Maishäcklers 250-300 t/h) und somit immer schneller große Mengen an Erntegut abgeerntet sind, muss der Abtransport des Ernteguts vom Feld schnell erfolgen, damit das Erntegut weiterverarbeitet, ordnungsgemäß gelagert bzw. verkauft werden kann, bevor es auf dem Feld verdirbt.

Ein weiteres Problem besteht darin, dass die Lagerstätten oder ähnliches immer weiter von den Feldern entfernt sind und somit immer längere Transportwege entstehen.

Der Abtransport von Erntegut, beispielsweise Kartoffeln, Zuckerrüben, Getreide etc. erfolgt häufig mittels Anhängern, die an Traktoren angehängt sind. Diese sind allerdings für den Straßenverkehr ungeeignet, da Traktoren nur sehr langsam fahren. Zusätzlich ist der Betrieb von Traktoren auf Straßen aufgrund des Treibstoffverbrauchs sehr teuer.

Am kostengünstigsten wäre der Transport von Ernteguts mittels LKWs mit Sattelaufliegern. Diese sind jedoch für die Feldarbeit ungeeignet, da sie aufgrund der relativ geringen Reifenbreite einen sehr hohen Druck auf den Boden ausüben und somit stecken bleiben würden.

Aus dem Grund benötigt man einen Anhänger, der für den Straßentransport an einen LKW, auf dem Feld jedoch an einen Traktor angekoppelt werden kann. Der Anhänger muss also sowohl für den Straßenverkehr als auch für die Feldarbeit geeignete Eigenschaften aufweisen.

In der Literatur finden sich verschiedene Fahrzeuge bzw. Fahrgestelle mit Raupenlaufwerken zur Verringerung des Bodendrucks und mit verstellbarer Spurbreite. Diese Fahrzeuge bzw. Fahrgestelle finden bevorzugt im Bereich des Straßenbauwesens Verwendung. Durch Verbreiterung der Spurbreite wird der Druck auf den Boden besser verteilt.

DE 24 50 839 zeigt ein Fahrgestell, bei dem die Spurbreite hydraulisch verändert werden kann. Das Fahrgestell besteht aus einem H-förmigen zentralen Rahmen mit rohrförmigen Enden und zwei seitlichen Teilrahmen mit rohrförmigen Seitenarmen, in denen die Enden des zentralen Rahmens teleskopisch gleitbar sind.

Die Patentschrift DE 31 46 661 C2 beschreibt ein Fahrzeug mit variabler Fahrwerksgeometrie, wobei das beschriebene Fahrzeug schwenkbare Fahrwerksträger aufweist, so dass der eigentliche Fahrzeugkörper von allen Antriebseinrichtungen für Schwenken und Fahren frei bleibt.

Das Dokument DE 34 42 319 A1 zeigt einen verstellbaren Unterwagen für Kettenfahrzeuge, v. a. für kettenangetriebene Baumaschinen. Der Unterwagen weist einen eigenen Antrieb auf und die Kettenträger können ausgeklappt werden.

Die europäische Patentschrift EP 0 715 030 B1 zeigt ein Fahrgestell mit verstellbarer Spurbreite und eigenem Traktionsantriebsmittel an beiden Unterrahmen. Dieses Fahrgestell findet vor allem bei kettenangetriebenen Baumaschinen Verwendung.

Das Dokument EP 0 973 673 B1 beschreibt ein achsabstandveränderliches Unterstützgestell zur Gleiseinsetzung. Das Fahrgestell ist für Raupenmaschinen geeignet und weist einen zentralen H- Rahmen und zwei seitliche Teilrahmen auf.

EP 1 140 607 B1 offenbart ein modulares Raupensystem. Das vorgeschlagene Raupensystem kann rasch an jedes beliebige Fahrzeug angepasst werden, das über einen Lasten tragenden Rahmen verfügt.

EP 1 248 721 B1 beschreibt eine angetriebene Gummiraupe mit Aufhängungsvorrichtung für eine landwirtschaftliche Maschine. Die Erfindung bezieht sich auf ein Laufketten- und Aufhängungs- oder Federungssystem für einen landwirtschaftlichen Traktor.

Dokument DE 1 175 617 offenbart ein Mehrzweckgerät mit veränderlicher Spurbreite und offenbart den Oberbegriff von Anspruch 1.

Die beschriebenen Systeme bewirken teilweise eine bessere Verteilung der Last, allerdings ist keines dieser Fahrgestelle zum Abtransport von Erntegut, d.h. zum Einsatz auf dem Feld als auch zum Einsatz auf der Strasse geeignet.

### Aufgabenstellung

Das Ziel der Erfindung besteht darin ein Fahrgestell zu entwickeln, dass relativ einfach auf der Straße bewegt werden kann und auf dem Feld dazu dient, zum Erntetransport verwendete Sattelauflieger aufzunehmen und deren Last auf den Boden besser zu verteilen.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen.

### Beschreibung

Die vorliegende Erfindung stellt ein Fahrgestell mit einem Raupenlaufwerk zur Verfügung, das an jede denkbare Zugmaschine, insbesondere einen Traktor oder ein landwirtschaftliches Kombinationsfahrzeug o. dgl. angekuppelt werden kann. Für den Straßentransport des Fahrgestells kann es auch an einen LKW angekoppelt werden. Das erfindungsgemäße Fahrgestell weist vorzugsweise keinen eigenen Antrieb auf, sondern bildet grundsätzlich ein gezogenes Fahrzeug.

Gemäß einer Ausführungsform der Erfindung kann das Fahrgestell auch ein Tandem- oder Tridem-Laufwerk breiter, beispielsweise luftgefüllter Reifen aufweisen. Wichtig ist eine möglichst große Auflagefläche auf den Boden, so dass sich das auf dem Fahrgestell lastende Gewicht gut verteilt. Das Fahrgestell weist mindestens zwei Reifen oder Gurtband- oder Raupenlaufwerke auf, kann jedoch auch vier, sechs oder mehr Reifen oder Laufwerke aufweisen, die jeweils an den Längsseiten des Fahrgestells angeordnet sind.

Das Fahrgestell besteht aus einem langen Träger und Rädern oder Raupenlaufwerken, wobei vor allem breite Endlosraupenketten verwendet werden können. Das erfindungsgemäße Fahrgestell ist in seiner Breite regulierbar. Zum Transport des Fahrgestells über normale Verkehrsstrassen ist es wünschenswert, wenn dieses nicht besonders breit ist, um kein Verkehrshindernis darzustellen bzw. um die gesetzlichen Grenzwerte einzuhalten. Auf dem Feld dagegen ist eine möglichst große Spur vorteilhaft, da diese eine erhöhte Standfestigkeit bedingt. Die Last kann besser verteilt werden, so dass sich der lokale Druck auf den Boden verringert. Auch wird dadurch die Kippsicherheit bei Fahrten über unbefestigten Boden verbessert.

Das Fahrgestell kann also mindestens in zwei Spurbreiten eingestellt werden: eine schmale Transportbreite und eine weite Arbeits- bzw. Feldbreite. Der Umbau zwischen Transport- und Arbeitsbreite erfolgt schnell und sicher, wobei keine zusätzlichen Werkzeuge notwendig sind.

Die Regulierung der Breite erfolgt bspw. mittels einer hydraulischen Betätigungsvorrichtung. Am Grundrahmen befindet sich eine Querstange an der bewegliche vordere Teilrahmen befestigt sind, welche zudem über ein Scharnier mit hinteren Teilrahmen beweglich verbunden sind. Das Scharnier besteht aus einem Anlenkhebel, der starr mit den hinteren Teilrahmen und beweglich mit den vorderen Teilrahmen gekoppelt ist, und einem doppelt wirkenden hydraulischen Stellzylinder. Mittels dieses Scharniers kann der in der Transportstellung enge Rahmen aufgeweitet werden, so dass eine Spurweite von bis zu 5 m eingestellt werden kann. Für den Fachmann versteht sich von selbst, dass auch andere Betätigungsmechanismen sinnvoll eingesetzt werden können, bspw. eine Verstellung mittels pneumatischem Druckzylinder oder mittels elektromotorischem Antrieb o. dgl. Diese Varianten sind ebenfalls von dem Erfindungsgedanken umfasst.

Zur Aufladung eines Sattelaufliegers befindet sich das Fahrgestell in der Arbeitsstellung mit breiter Spurweite. Das erfindungsgemäße Fahrgestell wird unter einen abgekoppelten Sattelauflieger geschoben. Mithilfe eines Hebelmechanismus wird der Sattelauflieger angehoben, so dass kein Bodenkontakt zu den Reifen des Sattelaufliegers mehr besteht. Das Gewicht des Sattelaufliegers liegt somit auf dem Fahrgestell auf und wird über dieses auf dem Boden verteilt. Diese Variante des erfindungsgemäßen Fahrgestells kann sich auch für den Güterfern- und Nahverkehr eignen, da damit eine universelle Wechselmöglichkeit für große Lasten, insbesondere auch für Containerlasten zur Verfügung gestellt wird. Bei dieser Variante weist das Fahrgestell vorzugsweise herkömmliche LKW-Räder auf, die keine Überbreite auf normalen Straßen verursachen.

Da das erfindungsgemäße Fahrgestell für den landwirtschaftlichen Einsatz Raupenlaufwerke oder mehrere große, relativ breite Räder aufweist, wird der Druck besser auf dem Boden verteilt als bei Verwendung von Reifen. Lokale Druckspitzen werden auf diese Weise vermieden.

Das Fahrgestell weist mindestens zwei Mechanismen mit mindestens zwei Befestigungspunkten für die Verankerung eines Sattelaufliegers auf, wobei sich ein Befestigungspunkt im vorderen, und der andere im hinteren Bereich des Fahrgestells befinden. Gemäß einer bevorzugten Ausführungsform weist das Fahrgestell insgesamt drei Befestigungspunkte zur Verankerung des Sattelaufliegers auf. Am hinteren Ende des Fahrgestells befinden sich zwei Befestigungsmechanismen, die eine Querstange am Sattelauflieger umfassen. Der dritte Befestigungsmechanismus zur Aufnahme und Verankerung eines dritten Befestigungspunktes befindet sich im vorderen Grundrahmenbereich des Fahrgestells.

Die Befestigungsmechanismen bestehen beispielsweise jeweils aus einem Schwenkhebel und einem verstellbaren Hubzylinder. Eine hydraulische oder pneumatische Verlängerung der Hubzylinder führt zu einer nach oben gerichteten Bewegung der Schwenkhebel. Mithilfe der beschriebenen Befestigungsmechanismen ist es möglich, einen Sattelauflieger an mindestens zwei Punkten fest mit dem Fahrgestell zu verbinden.

Parallel zur Verankerung wird der Sattelauflieger angehoben. Gemäß einer bevorzugten Ausführungsform erfolgt eine Anhebung um ca. 20 cm. Dadurch wird erreicht, dass die Räder des Sattelaufliegers keinen Bodenkontakt haben. Das gesamte Gewicht liegt auf dem Fahrgestell auf und wird durch dieses auf den Boden verteilt. Aufgrund der großen Spurbreite und der Verwendung von Raupen ergibt sich eine vorteilhafte Druckverteilung.

Das Fahrgestell mit dem angehobenen Sattelauflieger kann mittels eines Traktors über das Feld gezogen werden. Beispielsweise kann der auf dem erfindungsgemäßen Fahrgestell aufliegende Sattelauflieger auf diese Art und Weise neben einer Erntemaschine hergefahren und befüllt werden.

Ist der Sattelauflieger voll beladen, so wird er am Feldrand abgekoppelt und an einen LKW angekoppelt, der den Transport auf der Strasse übernimmt. Ein zwischenzeitlich neu angekommener leerer Anhänger kann sofort auf das Raupenfahrgestell aufgeladen werden, so dass die Ernte direkt weitergehen kann.

Die Abkoppelung erfolgt analog zur Befestigung auf dem Fahrgestell. Zuerst wird der Druck von den Hubzylindern der Befestigungssysteme weggenommen, so dass sich diese nach unten bewegen. Dadurch löst sich die Sperre zwischen den hinteren Befestigungsmechanismen des Fahrgestells und der Querstange des Sattelaufliegers. Jetzt kann das Fahrgestell unter dem Sattelauflieger herausgezogen werden.

Gemäß einer weiteren Ausführungsform werden keine Zusatzvorrichtungen in Form einer Querstange und eines dritten Befestigungspunktes am Sattelauflieger benötigt. Wie oben beschrieben wird das erfindungsgemäße Fahrgestell unter den Sattelauflieger geschoben und greift dann an vorhandenen Strukturen an wodurch eine Verankerung und Befestigung zustande kommt. Beispielsweise kann das erfindungsgemäße Fahrgestell eine Vorrichtung aufweisen, dies es erlaubt, die Räder des Sattelaufliegers direkt zu packen. Eine weitere Möglichkeit besteht darin, die Räder auf Radauflieger auffahren zu lassen und mittels seitlicher Greifer zu fixieren. Anschließend können die Radauflieger angehoben werden, so dass kein Bodenkontakt mehr besteht.

Diese Erfindung weist den enormen Vorteil auf, dass eine direkte Befüllung von Sattelaufliegern erfolgt, die anschließend direkt mithilfe von LKW über die Strasse abtransportiert werden. Vorteilhaft ist weiterhin, dass die Reifen des Sattelaufliegers auf dem Feld kein Bodenkontakt haben, so dass die enorme Straßenverschmutzung entfällt, die häufig bei Traktoren, die direkt vom Feld kommen, zu beobachten ist.

Gemäß einer weiteren bevorzugten Ausführungsform weist das erfindungsgemäße Fahrgestell einen eigenen Antrieb auf, so dass es ohne Verwendung einer Zugmaschine angewendet werden kann.

### Figurenbeschreibung

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
- Fig. 1a: zeigt das Fahrgestell von oben in seiner Transportgröße;
- Fig. 1b: zeigt das Fahrgestell von oben mit verbreiterter Spurweite im Feld-/ Arbeitsmodus;
- Fig. 2: zeigt eine Seitenansicht eines erfindungsgemäßen Fahrgestells mit Raupenlaufwerk;
- Fig. 3: zeigt eine perspektivische Darstellung des Fahrgestells;
- Fig. 4: zeigt einen Sattelauflieger mit zusätzlicher Querstange und Befestigungspunkt;
- Fig. 5a/b: zeigen das Aufladen des Sattelaufliegers auf das Fahrgestell und
- Fig. 6a/b: zeigen jeweils eine Detailansicht des Hebelmechanismus zum Verankern und Anheben des Sattelaufliegers.

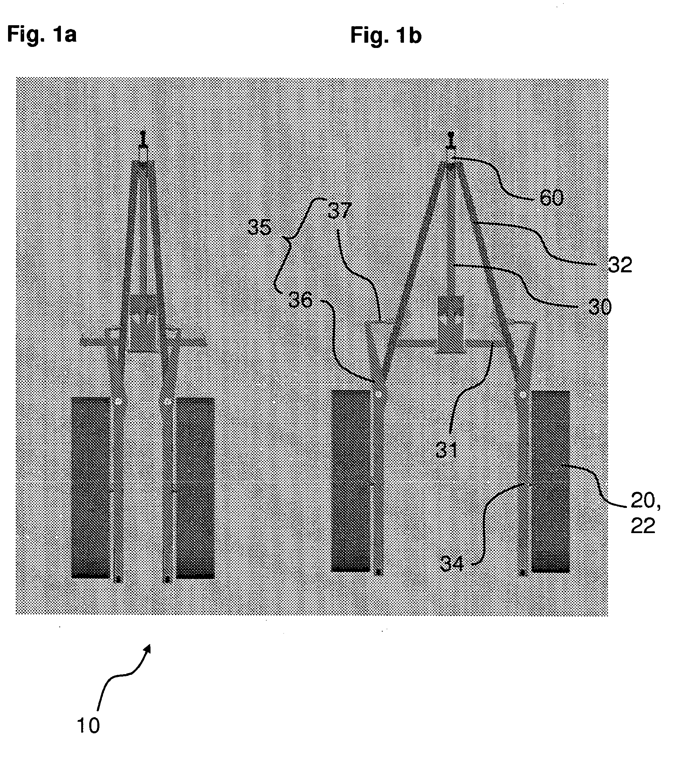

Eine mögliche Ausgestaltung eines Fahrgestells mit einem in seiner Spurbreite einstellbare Raupenlaufwerk zur erfindungsgemäßen Anhebung von Sattelaufliegern wird anhand der Figuren 1a und 1b illustriert.

Das Fahrgestell 10 besteht aus einem Hauptrahmen 30 mit verbundenen Teilrahmen 32, 34. An den hinteren Teilrahmen 34 befinden sich die Achsen für das Raupenlaufwerk 20 mit Endlosraupenkette 22. Das Fahrgestell 10 wird über eine Anhängerkupplung 60 an eine Zugmaschine beispielsweise einen Traktor oder einen LKW angehängt.

Am Grundrahmen 30 befindet sich eine Querstange 31, an der die beweglichen Teilrahmen 32 beweglich befestigt sind. Die Teilrahmen 32 sind weiterhin mit den Teilrahmen 34 über ein Scharnier 35 beweglich verbunden. Das Scharnier besteht aus einem Anlenkhebel 36, der starr mit den hinteren Teilrahmen 34 und beweglich mit den vorderen Teilrahmen 32 gekoppelt ist, und doppelt wirkenden Linearmotoren 37 bzw. hydraulischen Stellzylindern 37. Mittels dieses Scharniers kann der in der Transportstellung enge Rahmen (vgl. Fig. 1a) aufgeweitet werden. Die Scharnierhebel werden beispielsweise hydraulisch mit Druck beaufschlagt und somit verlängert, daraufhin bewegen sich die Teilrahmen 32 entlang der Querstange 31 zu deren beiden Enden hin. Dies führt zu einer Verbreiterung der Spurweite des Fahrgestells 10 (vgl. Fig. 1 b). Es können somit Spurweiten von bis zu 5 m eingestellt werden.

Die Spurverbreiterung mittels eines hydraulisch oder pneumatisch gesteuerten Scharniers erfolgt schnell und einfach, es werden keine zusätzlichen Werkzeuge benötigt.

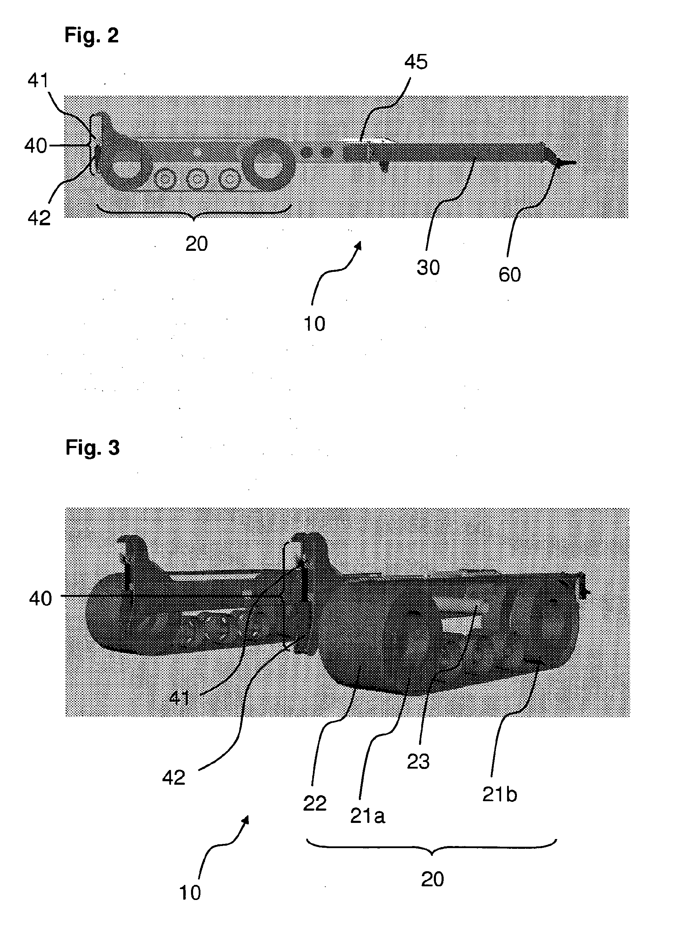

Die Figuren 2 und 3 stellen weitere Ansichten des Fahrgestells 10 dar. Das Raupenlaufwerk 20 besteht aus einem linken Laufwerk 21 a und einem rechten Laufwerk 21 b, die an einem Laufwerksrahmen (nicht gezeigt) befestigt sind. Dieser Laufwerksrahmen ist an einer mittigen Aufhängung 23 am hinteren Teilrahmen 34 befestigt. Die Laufwerke 21 a und 21 b sowie kleinere zwischengelagerte Rollen werden von der Endlosraupenkette 22 umlaufen.

Weiterhin weist das Fahrgestell 10 drei Mechanismen zur Verankerung eines Sattelaufliegers an drei Punkten auf. Die beiden Befestigungsmechanismen 40 befinden sich jeweils am hinteren Ende der hinteren Teilrahmen 34 des Fahrgestells 10 und bestehen aus einem beweglichen Schwenkhebel 41 und einem hydraulisch verstellbaren Hubzylinder 42. Der Schwenkhebel 41 bewegt sich bei hydraulischer Verlängerung des Hubzylinders 42 nach oben, so dass sich der Abstand zum starren Befestigungshaken 43 verringert.

Der dritte Befestigungsmechanismus befindet sich im vorderen Bereich des Fahrgestells und besteht aus einem Schwenkhebel 45 mit Aufnahme für den dritten Befestigungspunkt sowie einem Hubzylinder 46.

Mithilfe der beschriebenen Befestigungsmechanismen ist es möglich, einen Sattelauflieger 12 an drei Punkten fest mit dem Fahrgestell 10 zu verbinden.

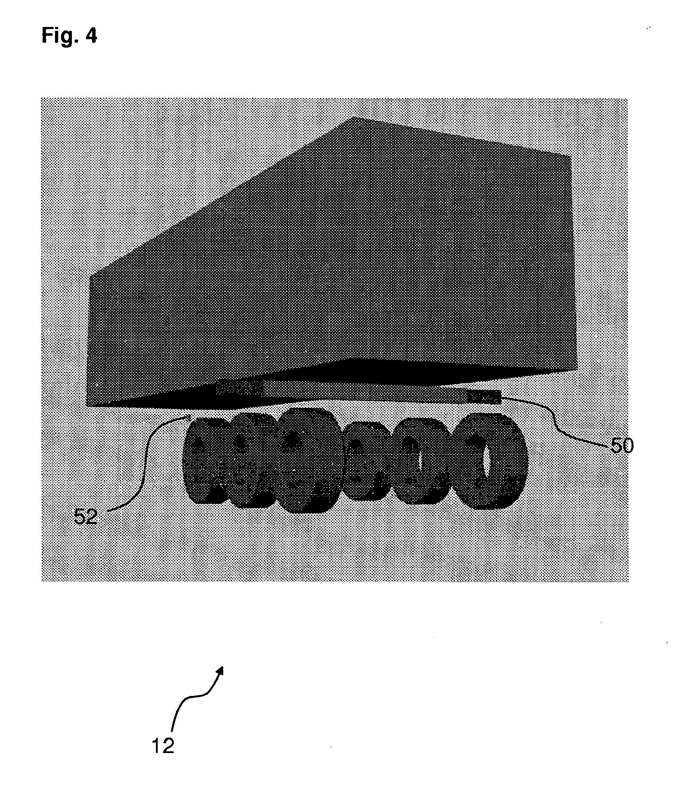

Fig. 4 zeigt die notwendigen Vorrichtungen, die ein Sattelauflieger 12 aufweisen muss, damit er auf das erfindungsgemäße Fahrgestell 10 aufgeladen und an den drei Befestigungsmechanismen (40; 45) verankert werden kann. Dabei handelt es sich um eine Querstange / -strebe 50 im hinteren Bereich des Sattelaufliegers 12 sowie einen zusätzlichen Befestigungspunkt 52 im vorderen Bereich. Der Abstand zwischen der Querstrebe 50 und dem Befestigungspunkt 52 beim Sattelauflieger 12 entspricht dem Abstand zwischen dem ersten und dem zweiten Befestigungsmechanismus 40 und 45 des Fahrgestells 10.

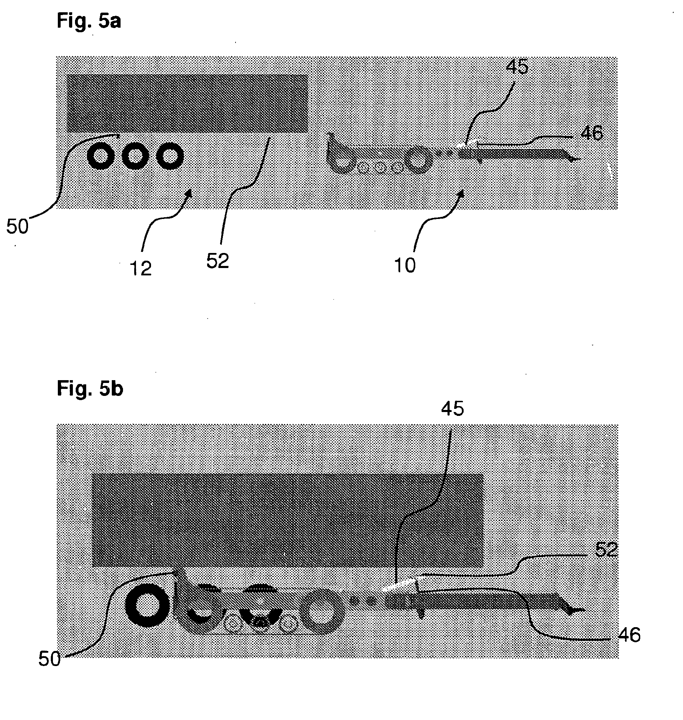

Die Figuren 5a und 5b stellen das Aufladen eines Sattelaufliegers 12 auf das Fahrgestell 10 dar. Der Schwenkhebel 45 des Fahrgestells 10 wird als erstes mithilfe des Hubzylinders 46 nach oben geschwenkt, so dass eine Auflagefläche für den Auflieger 12 und eine Führung für den Befestigungspunkt 52 entsteht.

Der Sattelauflieger wird vom LKW abgekoppelt und der LKW weggefahren. Dann wird das, beispielsweise an einen Traktor gekoppelte, Fahrgestell 10 rückwärts unter den Sattelauflieger 12 geschoben bis die beiden hinteren Befestigungsmechanismen 40 die Querstange 50 umgreifen.

Gleichzeitig schiebt sich der Befestigungspunkt 52 in die Stütze 45, die eine Führungsrinne 45a enthält. Nachdem die Querstange 50 und der Befestigungspunkt 52 richtig positioniert und eingerastet sind, werden die hydraulischen Hubzylinder mit weiterem Druck beaufschlagt, so dass sie sich weiter verlängern und nach oben bewegen.

Durch Betätigen der Hubzylinder 42 werden die Schwenkhebel 41 nach oben bewegt. Das führt zum einen dazu, dass die Querstange 50 des Sattelaufliegers 12 fest umschlossen wird. Außerdem bewirkt die Bewegung des Schwenkhebels 41 eine Anhebung des Sattelaufliegers im hinteren Bereich.

Die gleichzeitige oben bereits beschriebene Betätigung des vorderen Hubzylinders 46 führt zu einem Anheben des Sattelaufliegers im vorderen Bereich. Somit wird der gesamte Sattelauflieger 12 um etwa 20 cm angehoben, so dass die Räder des Sattelaufliegers keinen Bodenkontakt mehr haben. Das gesamte Gewicht des Sattelaufliegers 12 liegt somit auf dem Fahrgestell 10 auf und wird durch dieses auf den Boden übertragen. Aufgrund der großen Spurbreite des Fahrgestells 10 ergibt sich eine bessere Druckverteilung.

Der auf dem Fahrgestell 10 positionierte Sattelauflieger 12 kann nun neben einem Erntefahrzeuge hergezogen und befüllt werden. Ist die Ladefläche voll, wird er am Feldrand entsprechend vom Fahrgestell wieder entfernt, an einen LKW gekoppelt und weggefahren.

Das Lösen der Befestigung und das Entfernen des Sattelaufliegers 12 erfolgt folgendermaßen: Zuerst wird der Druck von den Hubzylindern 42 und 46 weggenommen, so dass sich diese nach unten bewegen. Dadurch löst sich die Sperre zwischen den hinteren Befestigungsmechanismen 40 und der Querstange 50. Jetzt kann das Fahrgestell 10 unter dem Sattelauflieger 12 herausgezogen werden, wobei der Befestigungspunkt 52 wiederum entlang der Führungsschiene 45a des vorderen Schwenkhebels 45 herausgezogen wird.

Nachdem der volle Sattelauflieger 12 entfernt wurde, kann das Fahrgestell 10 direkt unter einen neuen Anhänger geschoben werden.

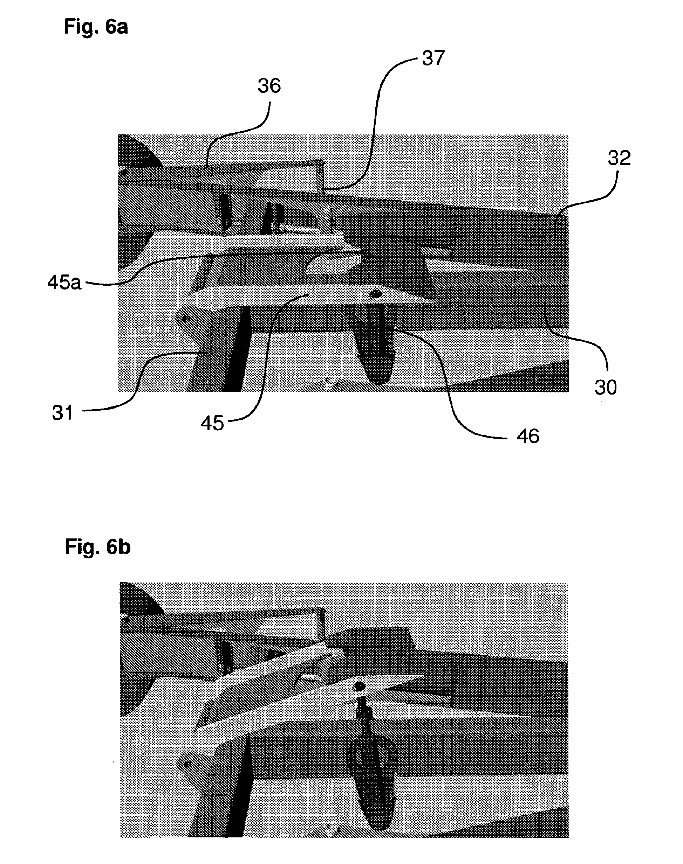

Die Figuren 6a und 6b zeigen in Detailansichten die nach oben gerichtete Bewegung des Schwenkhebels 45 bei hydraulischer Verlängerung des Hubzylinders 46. Die Fig. 6a illustriert den Ruhezustand, wenn das Fahrgestell nicht verwendet wird. In diesem Fall ist der Hubzylinder 46 ganz zusammen geschoben und der Schwenkhebel liegt auf dem Grundrahmen auf.

### Bezugszeichenliste

- 10: Fahrgestell
- 12: Sattelauflieger
- 20: Raupenlaufwerk
- 22: Endlosraupenkette
- 30: Tragrahmen / Hauptrahmen
- 31: Querstange
- 32: vorderer Teilrahmen
- 34: hinterer Teilrahmen
- 35: Scharnier
- 36: Anlenkhebel
- 37: Stellzylinder; Linearmotoren
- 40: Befestigungsmechanismen
- 41: Schwenkhebel
- 42: Hubzylinder
- 43: Befestigungshaken
- 45: Schwenkhebel
- 46: Hubzylinder für Schwenkhebel
- 50: Querstange
- 52: vorderer Befestigungspunkt
- 60: Anhängerkupplung zum Anhängen an eine Zugmaschine

## Patentansprüche

1. Fahrgestellanordnung (10) mit Rädern und/oder Raupenlaufwerken (20, 22) mit veränderbarer Spurbreite, insbesondere für die Verwendung in der Landwirtschaft, mit midestens zwei Befestigungsmechanismen (40, 45) Befestigung eines Sattelaufliegers (12), wobei in einer Arbeitsstellung mit breiter Spurweite ein Sattelauflieger (12) über die Befestigungsmechanismen (40, 45) an die Fahrgestellanordnung (10) befestigbar ist;
dass die Fahrgestellanordnung (10) in einer Transportstellung eine schmale Spurweite für die Straßenfahrt aufweist; **dadurch gekennzeichnet,**
**dass** die Fahrgestellanordnung (10) den Sattelauflieger (12) insgesamt anhebt, so dass die Reifen des angehobenen Sattelaufliegers (12) keinen Kontakt mit dem Boden haben.

2. Fahrgestellanordnung nach Anspruch 1, wobei die Fahrgestellanordnung (10) eine Ankoppeleinrichtung (60) für eine Zugmaschine, insbesondere für einen Traktor oder LKW aufweist.

3. Fahrgestellanordnung nach Anspruch 1, wobei die Fahrgestellanordnung (10) einen eigenen Antrieb aufweist.

4. Fahrgestellanordnung nach einem der vorangehenden Ansprüche, wobei die Fahrgestellanordnung (10) mindestens einen Befestigungsmechanismus im vorderen Bereich (45) und mindestens einen Befestigungsmechanismus (40) im hinteren Bereich aufweist.

5. Fahrgestellanordnung nach Anspruch 4, wobei die Befestigungsmechanismen einen Schwenkhebel (41; 45) und einen Hubzylinder (42; 46) umfassen.

6. Fahrgestellanordnung nach einem der vorangehenden Ansprüche, wobei die Fahrgestellanordnung einen Radauflieger umfasst, auf den der Sattelauflieger (12) auffährt.

7. Fahrgestellanordnung nach Anspruch 6, wobei der Radauflieger anhebbar ist.

8. Fahrgestellanordnung nach einem der vorangehenden Ansprüche, wobei die Regulation der Spurweite hydraulisch erfolgt.

9. Fahrgestellanordnung nach einem der vorangehenden Ansprüche, wobei vordere Teilrahmen (32) beweglich mit einem Grundrahmen (30) verbunden sind.

10. Fahrgestellanordnung nach Anspruch 9, wobei die vorderen Teilrahmen (32) beweglich mit hinteren Teilrahmen (34) verbunden sind.

11. Fahrgestellanordnung nach Anspruch 10, wobei zwischen dem vorderen Teilrahmen (32) und dem hinteren Teilrahmen (34) ein Scharnier angeordnet ist, das insbesondere einen Anlenkhebel (36) und einen Stellzylinder (37) umfasst.

## Claims

1. Vehicle chassis (10) with wheels and / or tracks (20, 22) having a variable track width, particularly for the use in agriculture, comprising at least two mounting mechanisms (40, 45) for the fixation of a semi- trailer (12), whereby a semi- trailer (12) is fixable on the vehicle chassis (10) above the mounting mechanisms (40, 45) in an operating position with a wide track width, whereby the vehicle chassis (10) has a transport position with a small track width for road travel, **characterized in that** the semi- trailer (12) is raised as a whole by the vehicle chassis (10), so that the wheels of the raised semi- trailer (12) have no soil contact.

2. Vehicle chassis (10) according to claim 1, wherein the vehicle chassis (10) comprises coupling means (60) for a traction engine, especially a tractor or a truck.

3. Vehicle chassis (10) according to claim 1, wherein the vehicle chassis (10) comprises own driving means.

4. Vehicle chassis (10) according to one of the previous claims, wherein the vehicle chassis (10) comprises at least one mounting mechanism (45) in the front section and at least one mounting mechanism (40) in the back section.

5. Vehicle chassis (10) according to claim 4, wherein the mounting mechanisms comprises a swivel lever (41, 45) or a lifting cylinder (42, 46).

6. Vehicle chassis (10) according to one of the previous claims, wherein the vehicle chassis (10) comprises a trailer, onto which the semi- trailer (12) is driven.

7. Vehicle chassis (10) according to claim 6, whereby the trailer is liftable.

8. Vehicle chassis (10) according to one of the previous claims, wherein the track width is regulated hydraulically.

9. Vehicle chassis (10) according to one of the previous claims, whereby front subframes (32) are movably connected to a main frame (30).

10. Vehicle chassis (10) according to claim 9, whereby front subframes (32) are movably connected to back subframes (34).

11. Vehicle chassis (10) according to claim 10, whereby a hinge is located between the front subframe (32) and the back subframe (34), whereby the hinge preferably comprises an actuator lever (36) and a support cylinder (37).

## Revendications

1. Arrangement de châssis (10) avec des roues et/ou des mécanismes de roulement à chenille (20, 22) à écartement de roues variable, en particulier pour utilisation dans l'agriculture, avec au moins deux mécanismes de fixation (40, 45) pour la fixation d'une semi-remorque (12), étant donné que, en une position de travail à large écartement de roues, une semi-remorque (12) peut être fixée à l'arrangement de châssis (10) à l'aide des mécanismes de fixation (40, 45) ;
l'arrangement de châssis (10) présente en une position de transport un étroit écartement de roues pour la circulation routière ;
**caractérisé en ce que** l'arrangement de châssis (10) lève la semi-remorque (12) entièrement, de manière à ce que les roues de la semi-remorque (12) levée n'aient aucun contact avec le sol.

2. Arrangement de châssis selon la revendication 1, étant donné que l'arrangement de châssis (10) présente un équipement d'accouplement (60) pour un véhicule de traction, en particulier pour un tracteur ou camion.

3. Arrangement de châssis selon la revendication 1, étant donné que l'arrangement de châssis (10) présente son propre système d'entraînement.

4. Arrangement de châssis selon l'une quelconque des revendications précédentes, étant donné que l'arrangement de châssis (10) présente au moins un mécanisme de fixation à l'avant (45) et au moins un mécanisme de fixation (40) à l'arrière.

5. Arrangement de châssis selon la revendication 4, étant donné que les mécanismes de fixation comprennent un levier pivotant (41 ; 45) et un cylindre de levage (42 ; 46).

6. Arrangement de châssis selon l'une quelconque des revendications précédentes, étant donné que l'arrangement de châssis comprend une remorque à roues sur laquelle monte la semi-remorque (12).

7. Arrangement de châssis selon la revendication 6, étant donné que la remorque à roues est levable.

8. Arrangement de châssis selon l'une quelconque des revendications précédentes, étant donné que la régulation de l'écartement de roues est assurée hydrauliquement.

9. Arrangement de châssis selon l'une quelconque des revendications précédentes, étant donné que des cadres partiels (32) sont reliés de manière mobile à un cadre de base (30).

10. Arrangement de châssis selon la revendication 9, étant donné que des cadres partiels (32) sont reliés de manière mobile à un cadre de base (34).

11. Arrangement de châssis selon la revendication 10, étant donné qu'est disposé entre le cadre partiel avant (32) et le cadre partiel arrière (34) une charnière qui comprend en particulier un levier articulé (36) et un cylindre positionneur (37).
